# EUROPEAN PATENT SPECIFICATION

(11) **EP 2 590 370 B1**
(45) Date of publication and mention of the grant of the patent: **22.04.2015**
(21) Application number: 10860877.9
(22) Date of filing: 13.12.2010
(51) Int. Cl.: G06F 17/30, G06F 13/00, H04L 12/28, H04L 12/24, H04L 12/70

(54) **ALERT MONITORING DEVICE AND ALERT MONITORING METHOD**
ALARMÜBERWACHUNGSVORRICHTUNG ALARMÜBERWACHUNGSVERFAHREN
DISPOSITIF DE SURVEILLANCE D'ALERTE ET PROCÉDÉ DE SURVEILLANCE D'ALERTE

(43) Date of publication of application: 08.05.2013
(73) Proprietor: Mitsubishi Electric Corporation, Tokyo 100-8310 (JP)
(72) Inventor: FUJII, Teruko, Tokyo 100-8310 (JP); YOSHIMURA, Hitomi, Tokyo 100-8310 (JP)
(74) Representative: Kling, Simone
(86) International application number: PCT/JP2010/072381
(87) International publication number: WO 2012/081076

(56) References cited:
- JP-A- 7 023 041
- JP-A- 8 079 192
- JP-A- 9 307 550
- JP-A- 10 023 011
- JP-A- 2000 295 221
- JP-A- 2009 296 531
- US-A1- 2004 073 663
- US-A1- 2009 307 539
- US-A1- 2010 205 289
- US-B1- 6 208 324

## Description

### Field

The present invention relates to an alarm monitoring device that monitors alarms transmitted when failures occur in a communication network.

### Background

Conventionally, there are alarm monitoring devices that, when failures occur in a communication network, transmit alarms from parts where the failures are detected and monitor the alarms. For example, Patent Literature 1 mentioned below discloses the following technique. In a system such as a communication network where alarms are generated from a large number of nodes into a chain reaction, an alarm monitoring device monitors generated alarms and when a large number of alarms of the same type are generated within a certain time, one alarm is displayed to an operator as a representative alarm, so that an operator can quickly recognize that there are the large number of alarms.

Furthermore, Patent Literature 2 mentioned below discloses a technique that an alarm monitoring device learns a correlation or a generating frequency of generated alarms, and selects and displays only statistically related alarms, so that an operator automatically selects an alarm required for identifying a cause of the alarm and an operation load of the operator is reduced.
US 2004/073663 A1 concerns a method for describing problems in a telecommunications network is provided, wherein the alarms for a network service displayed on an operator's console are presented in the order of the path comprising the service and associated with respective network elements, followed by a description of a recommended corrective procedure for the alarms.
US 6,208,324 discloses an Event/Switch Matrix Window allowing the graphical presentation of operational information pertinent to network operators responsible for monitoring and controlling the workings of a telecommunications environment such as the public telephone network. Further, the Event/Switch Matrix Window allows the network operator the ability to custom tailor the presentation of information dynamically to respond to the immediate needs of the network operator in monitoring the telecommunications network.

### Citation List

### Patent Literatures

Patent Literature 1: Japanese Patent Application Laid-open No. 2002-057666
Patent Literature 2: Japanese Patent Application Laid-open No. 8-288944

### Summary

### Technical Problem

However, according to the above conventional techniques, when a large number of alarms are generated from a large number of nodes into a chain reaction, in order to narrow down alarm information to be displayed to an operator, the alarm monitoring device filters derivatively generated alarms to automatically extract only a causative alarm and displays this alarm to an operator. Accordingly, in the technique of Patent Literature 1 mentioned above, there is a problem that every time a new device or a new function is added to a system to be managed, programs that analyze a dependence relationship between alarms need to be modified. According to the technique of Patent Literature 2 mentioned above, the alarm monitoring device automatically learn a new dependent relationship, however, it takes time to complete the learning.

The present invention has been made in view of the above problems, and an object of the present invention is to provide an alarm monitoring device that can effectively narrow down alarm information and display the alarm information for an operator, regardless of a dependence relationship between a wide range of alarms in a communication network where a large number of alarms are generated into a chain reaction.

### Solution to Problem

To solve the above problems and achieve an object, there is provided an alarm monitoring device according to claim 1 and the method according to claim 5.

### Advantageous Effects of Invention

The alarm monitoring device according to the present invention can effectively narrow down alarm information and display the alarm information for an operator.

### Brief Description of Drawings

FIG. 1 is a configuration example of a communication network.
FIG. 2 is a configuration example of an alarm-generating path list.
FIG. 3 is a configuration example of a path DB.
FIG. 4 is a configuration example of the alarm-generating path list.
FIG. 5 is a configuration example of a generating alarm list.
FIG. 6 shows an alarm route from a communication node to an alarm monitoring device.
FIG. 7 is a flowchart of a process at the time of receiving an alarm.
FIG. 8 is a flowchart of a process before displaying the alarm-generating path list.
FIG. 9 depicts a relationship between a transmission line and a path.
FIG. 10 is a flowchart of a process at the time of setting a display mask.
FIG. 11 is a configuration example of a communication network.
FIG. 12 is a configuration example of a path DB.
FIG. 13 is a configuration example of a mask DB.
FIG. 14 is a configuration example of an alarm-generating path list.
FIG. 15 is a flowchart of a process before displaying the alarm-generating path list.
FIG. 16 is a flowchart of a process at the time of setting a display mask.
FIG. 17 is a flowchart of a process at the time of cancelling the display mask.

### Description of Embodiments

Exemplary embodiments of an alarm monitoring device according to the present invention will be explained below in detail with reference to the accompanying drawings. The present invention is not limited to the embodiments.

### First embodiment

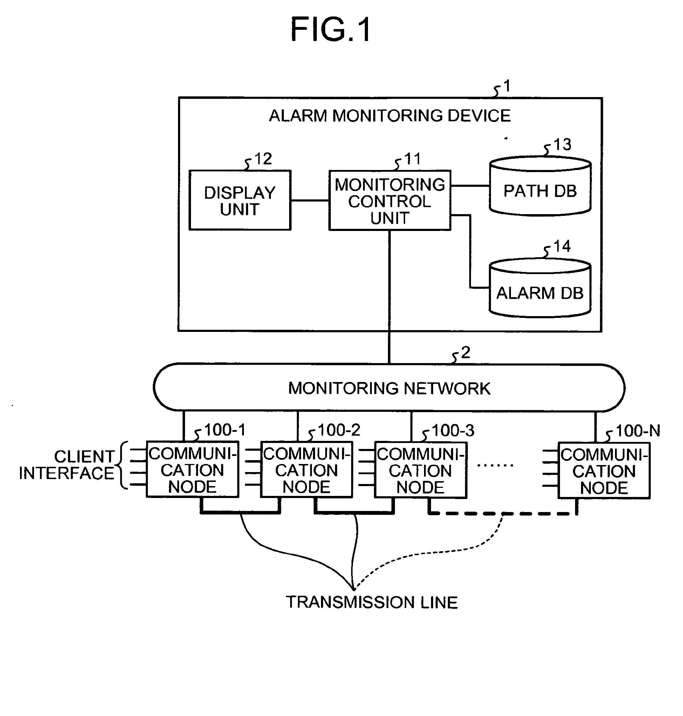

FIG. 1 is a configuration example of a communication network monitored by an alarm monitoring device according to a first embodiment of the present invention. The communication network includes an alarm monitoring device 1, a monitoring network 2, and communication nodes 100-1 to 100-N.

The alarm monitoring device 1 performs centralized management on alarms transmitted by the respective communication nodes 100-1 to 100-N, notifies an operator who is responsible for managing the communication network of generation of an alarm, and provides alarm information. The alarm monitoring device 1 includes a monitoring control unit 11, a display unit 12, a path database (DB) 13, and an alarm database (DB) 14.

The monitoring control unit 11 controls an operation of the entire alarm monitoring device 1, receives alarms transmitted from the respective communication nodes 100-1 to 100-N, and stores the alarms in the alarm DB 14. The monitoring control unit 11 displays a path, in which a communication failure is occurring, as an alarm-generating path list in a list format on the display unit 12.

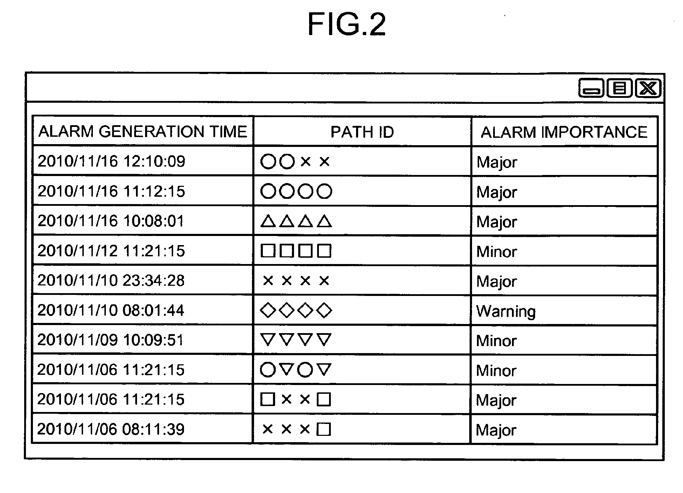

The alarm-generating path list is explained. FIG. 2 is a configuration example of the alarm-generating path list. The alarm-generating path list is a list of paths in which alarms are being generated, that is, communication failures are occurring. The list is displayed to an operator. An alarm generation time and an alarm importance are displayed for each path ID on the alarm-generating path list. The list is sorted by the alarm generation time and displayed. A path ID of the latest alarm generation time is displayed at the head. At the head of FIG. 2, for example, it is shown that an alarm having an alarm importance "Major" is generated in a path ID "○○××" at an alarm generation time "2010/11/16 12:10:09".

The display unit 12 is a display unit for displaying the alarm-generating path list created by the monitoring control unit 11. While a monitor can be provided as the display unit 12, the display unit 12 is not limited to a device that display lists on screens, and a printer or the like can be used.

The path DB 13 is a database for recording therein the path ID, a display mask flag, the alarm importance, the alarm generation time, and route information of a path in the communication network. The route information indicates information on a communication node, a transmission device, and a transmission line the path passes through.

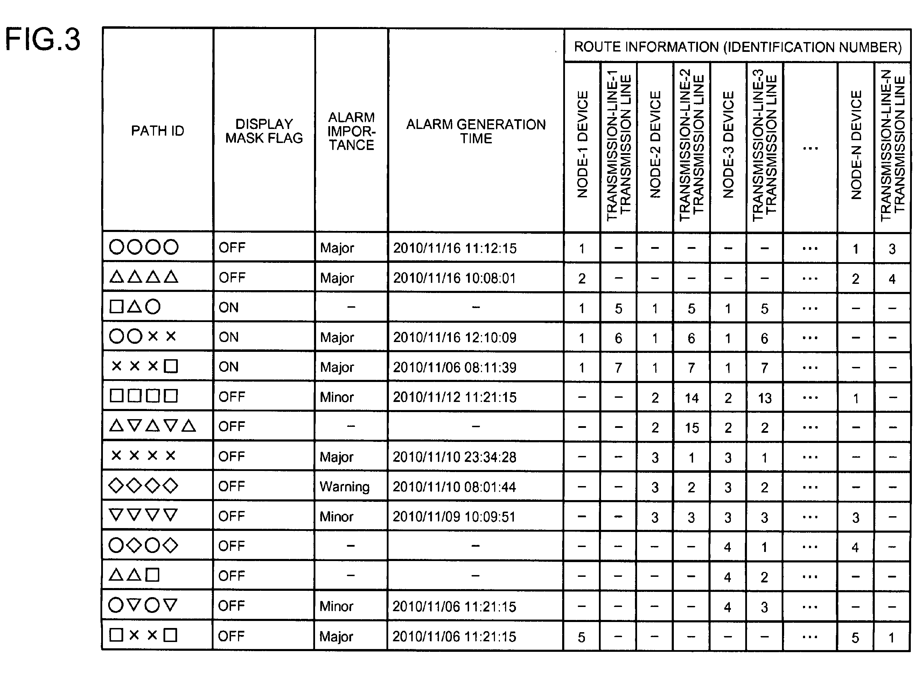

FIG. 3 is a configuration example of the path DB 13. The contents explained above are recorded for each path ID. For example, it is shown that a path having an ID "oooo" has a display mask flag of "OFF", an alarm importance of "Major", an alarm generation time of "2010/11/16 11:12:15", and route information of "node-1 device 1, transmission line-N transmission line 3, and node-N device 1".

In the path DB 13, when the display mask flag is ON, the display mask flag indicates that a path is not displayed on the alarm-generating path list even while an alarm is generated. The alarm importance is an importance of an alarm with the highest importance out of alarms being generated in a path. The alarm generation time is a generation time of a most recently generated alarm out of alarms with the alarm importance.

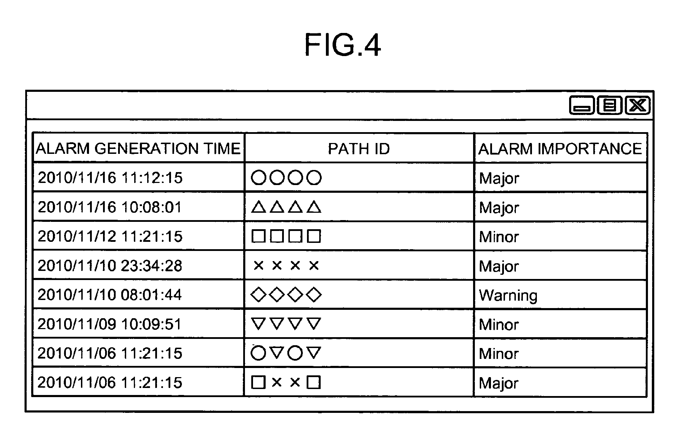

The alarm-generating path list when the display mask flag is ON is explained. FIG. 4 is a configuration example of the alarm-generating path list. In the path DB 13 shown in FIG. 3, the display mask flag is ON in items of path IDs "□Δ○", "○○××", and "×××□". When this condition of FIG. 3 is applied to FIG. 2, two paths "○○××" and "×××□" apply. Accordingly, the alarm-generating path list shown in FIG. 4 is provided by hiding the applicable path IDs "○○××" and "×××□" from the alarm-generating path list shown in FIG. 2. At this time, the monitoring control unit 11 executes a control such that a path having a path ID with a display mask flag of ON in the path DB 13 is not displayed on the display unit 12. Detailed operations are explained later.

The alarm DB 14 is a database for storing detailed information on generated alarms. For every alarm, an alarm generated location, a detected time, an alarm type, the alarm importance defined for each alarm type in advance, and an identifier (ID) of a related path are recorded. The monitoring control unit 11 can display contents of the alarm DB 14 as a generating alarm list on the display unit 12 so that an operator can refer to the list.

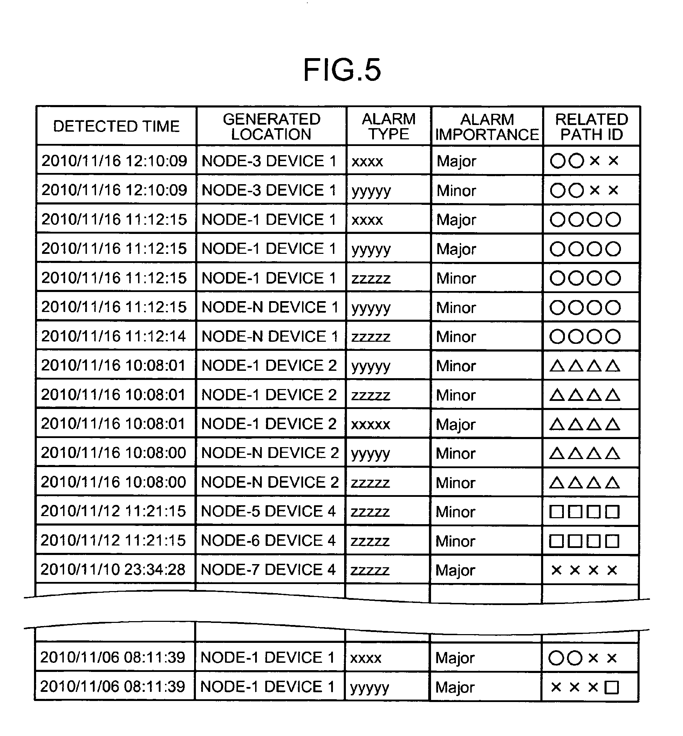

FIG. 5 is a configuration example of a generating alarm list. All alarms are recorded with respect to the contents explained above. For example, it is shown that at a detected time of "2010/11/16 12:10:09", an alarm having an alarm type "xxxx", the alarm importance "Major", and a related path ID "○○××" are generated at a generated location "node-3 device 1".

Referring back to the configuration of the communication network shown in FIG. 1, the monitoring network 2 is a dedicated network for realizing communication between the communication nodes 100-1 to 100-N and the alarm monitoring device 1.

Each of the communication nodes 100-1 to 100-N is a communication node including a node management device and a plurality of transmission devices. Each of the communication nodes 100-1 to 100-N includes a large number of client interfaces for providing a communication service using a transmission line.

The transmission line is a communication line connecting the communication nodes to each other. While examples of the transmission line include optical fiber cables of a metro network and a submarine cable system, the transmission line is not limited thereto. While the transmission line is arranged so that all the communication nodes are connected to each other by a linear topology in FIG. 1, the present invention is not limited thereto. The transmission line can be arranged so that the communication nodes are connected to each other by a ring topology or a mesh topology.

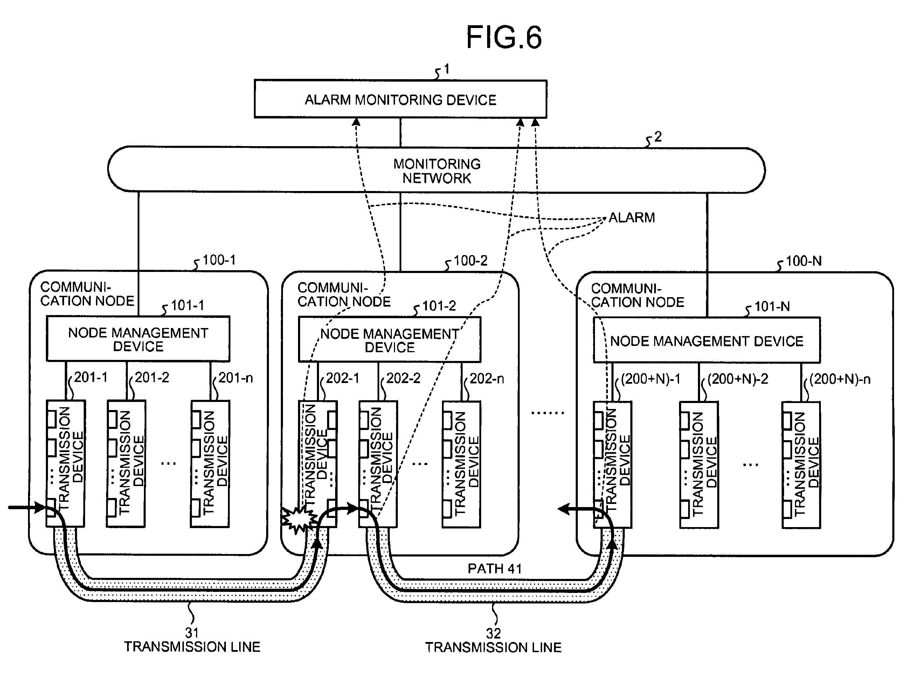

A flow of an alarm to the alarm monitoring device when a failure has occurred in the communication network shown in FIG. 1 is explained next. FIG. 6 shows an alarm route from a communication node to the alarm monitoring device. A configuration of the communication node is explained first. The communication node 100-1 includes a node management device 101-1 and transmission devices 201-1, 201-2, ..., and 201-n.

The node management device 101-1 is one of devices that configure the communication node 100-1 and is a management device that transmits alarms from the transmission devices 201-1, 201-2, ..., and 201-n, which configure the communication node 100-1, to the alarm monitoring device 1.

The transmission devices 201-1, 201-2, ..., and 201-n are devices that configure the communication node 100-1. Each of the transmission devices includes a plurality of client interfaces, and transmits and receives data to and from transmission devices belonging to other communication nodes by using the transmission line.

While the communication node 100-1 is explained, the communication nodes 100-2, ..., and 100-N have the same configuration.

Transmission lines 31 and 32 each connects the communication nodes to each other. The transmission lines 31 and 32 are same as the transmission line shown in FIG. 1. Only transmission lines used by a path 41 are shown in FIG. 6 as an example.

The path 41 is a communication line that is configured in advance to connect a client interface of one transmission device (hereinafter, "Ingress transmission device") serving as a start point to a client interface of the other transmission device (hereinafter, "Egress transmission device") serving as an end point. When the Ingress transmission device is not directly connected to the Egress transmission device by the transmission line, the path 41 is relayed by a communication node in the middle of connection. In FIG. 6, while the relaying communication node (the communication node 100-2 of FIG. 6) relays by directly connecting client interfaces of two transmission devices, it is also possible to configure to make a connection without using these client interfaces. Because a large number of paths are provided in the communication network, a path ID is given to each of the paths so as to be uniquely identified.

When a fault occurs in the transmission line or the transmission device, the transmission device in which the fault occurs or a transmission device connected to the failed transmission line (in most cases, a signal-receiving transmission device), and a transmission device on a communication direction downstream transmit an alarm to notify an operator managing the network of a detected abnormality. At this time, the transmission device detects a failure and transmits an alarm via the node management device and the monitoring network 2 to the alarm monitoring device 1. The transmitted alarm includes information on an alarm generated location and pieces of information such as a detected time, an alarm type, an importance defined in advance for each alarm type, and an identifier of a related path (a path that includes the alarm generated location in its route).

"Node-1 device 1" displayed by the identification number in the path DB 13 shown in FIG. 3 corresponds to the transmission device 201-1 of the communication node 100-1 in FIG. 6. For the convenience of expression, identification numbers in the path DB 13 are simplified; however, the numbers can be displayed in the same way.

An alarm monitoring operation of the alarm monitoring device 1 is explained next. When a failure occurs in a transmission device 202-1 on a route of the path 41, the transmission device 202-1 transmits an alarm via a node management device 101-2 and the monitoring network 2 to the alarm monitoring device 1. Furthermore, transmission devices 202-2 and (200+N)-1, which are located on the downstream of the transmission device 202-1 on the path 41 and are included in the communication nodes 100-2 to 100-N on the path 41, one after another transmit alarms via the node management device 101-2, a node management device 101-N, and the monitoring network 2 to the alarm monitoring device 1.

That is, when a failure occurs in the transmission device 202-1, in the alarm monitoring device 1, the monitoring control unit 11 one after another receives a large number of alarms from the transmission device 202-1 and its downstream transmission devices on the path 41. Concerning the order that alarms reach the alarm monitoring device 1, the alarm transmitted by the transmission device 202-1 does not necessarily reach the alarm monitoring device 1 first, and the alarms reach the alarm monitoring device 1 in a random order.

In the alarm monitoring device 1 having received alarms, the monitoring control unit 11 confirms a hold timer with respect to a path related to each of the received alarms. The hold timer is a timer that waits for a process of displaying a path related to a received alarm on the alarm-generating path list for a period set by the timer since the reception of the alarm. The hold timer prevents the contents displayed on the alarm-generating path list from being updated frequently in a short time. There is a method of associating a hold timer with a path to which a configuration indicated in items of the route information of FIG. 3 is related to set the timer. However, the present invention is not limited thereto, and a hold timer can be associated with a plurality of paths to be set.

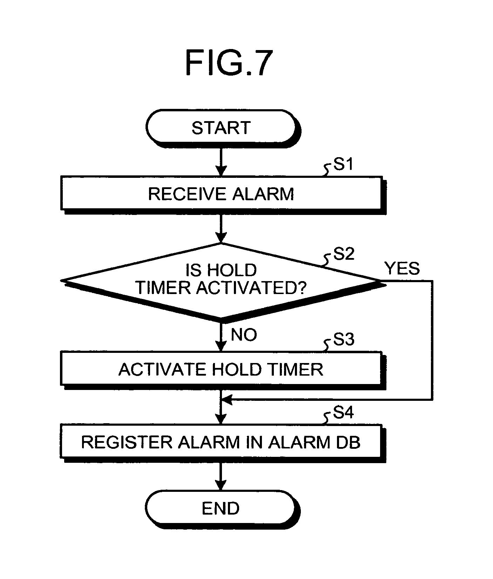

FIG. 7 is a flowchart of a process at the time of receiving an alarm. In the alarm monitoring device 1, when the monitoring control unit 11 receives an alarm (Step S1), the monitoring control unit 11 confirms whether the hold timer is activated with respect to a path indicated by a related path ID included in the received alarm (Step S2). When the hold timer is not activated (NO at Step S2), the monitoring control unit 11 activates the hold timer with respect to the path indicated by the related path ID (Step S3) and registers the alarm in the alarm DB 14 (Step S4). Meanwhile, when the hold timer is activated with respect to the path indicated by the related path ID included in the alarm (YES at Step S2), the monitoring control unit 11 registers the alarm in the alarm DB 14 (Step S4). The monitoring control unit 11 repeatedly performs the above process on all the received alarms.

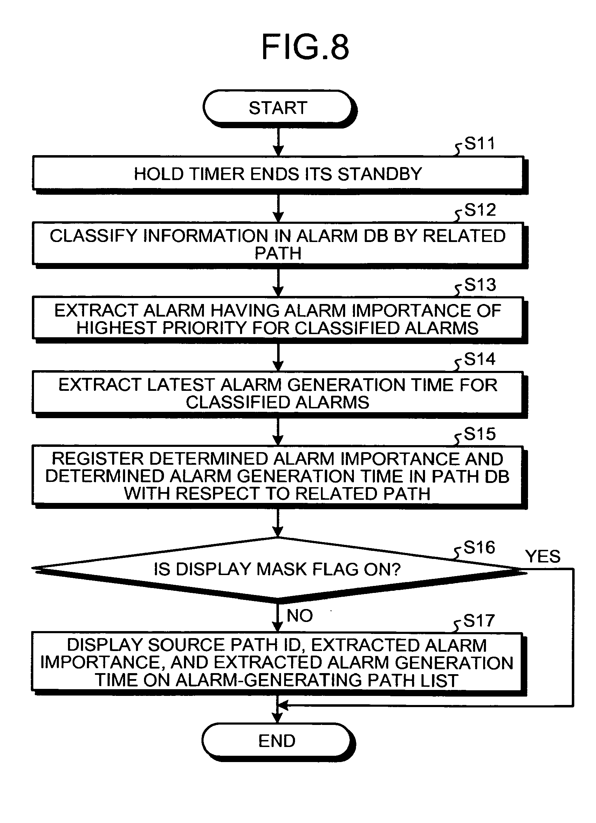

A process in the alarm monitoring device 1 before an alarm-generating path list is displayed after the hold timer elapses is explained next. FIG. 8 is a flowchart of a process before displaying the alarm-generating path list. When the hold timer elapses (Step S11), the monitoring control unit 11 classifies alarm information having path IDs of related paths associated with this hold timer in the alarm DB 14 (Step S12). The monitoring control unit 11 then extracts an alarm having an alarm importance of the highest priority out of classified alarms (Step S13). For example, in a case where three elements of the alarm importance are defined, that is, Major, Minor, and Warning, and the alarm database includes alarms of Major, Minor, and Warning, the monitoring control unit 11 extracts an alarm of Major. Furthermore, when only alarms of Minor and Warning are included, an alarm of Minor is extracted. The monitoring control unit 11 then selects an alarm of the latest detected time out of extracted alarms having the alarm importance of the highest priority, and determines the selected detected time as an alarm generation time (Step S14). The monitoring control unit 11 registers the alarm importance and the alarm generation time determined as explained above as data of the corresponding path of the path DB 13 (Step S15).

The monitoring control unit 11 then confirms whether the display mask flag of the corresponding path is ON in the path DB 13 (Step S16). When the display mask flag is OFF (NO at Step S16), the monitoring control unit 11 displays the path ID, the alarm generation time, and the alarm importance registered in the path DB 13 as the alarm-generating path list on the display unit 12 (Step S17). At this time, when there is an already displayed path, paths are sorted by the alarm generation time and displayed so that a path of the latest alarm generation time is at the head of the list. On the other hand, when the display mask flag is ON (YES at Step S16), the monitoring control unit 11 ends the process without displaying the corresponding path on the alarm-generating path list.

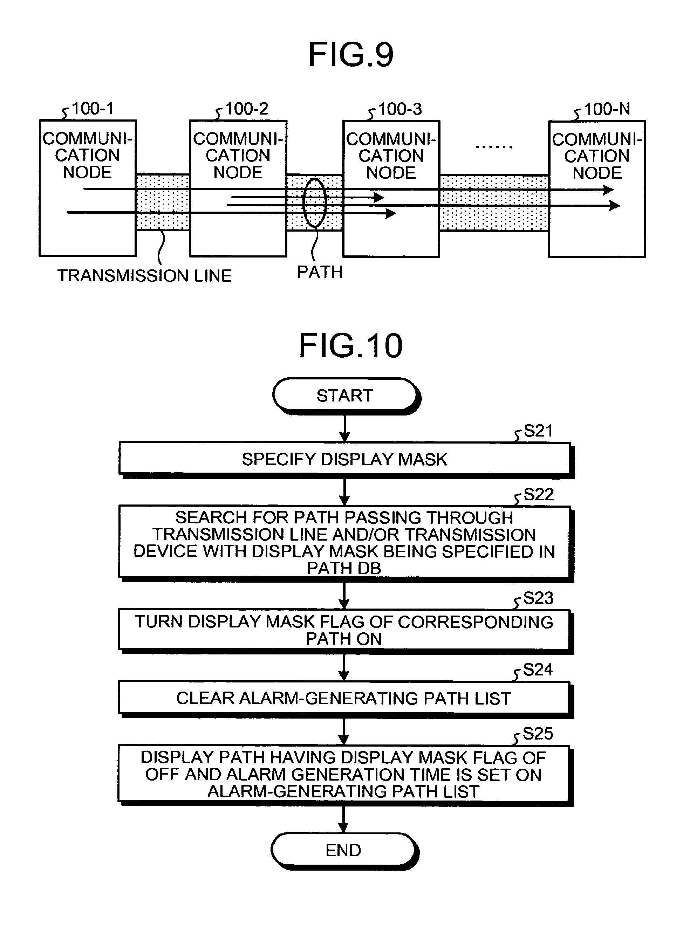

A method of handling a case when there is a critical failure, such an optical cable serving as a transmission line is cut, is explained here. FIG. 9 depicts a relationship between a transmission line and a path. For example, in a communication network using a WDM (Wavelength Division Multiplex) technique, a large number of wavelengths are multiplexed in one optical cable and these wavelengths are used for communication on different pieces of information. That is, several tens or hundreds of paths use one optical cable. Ingress transmission devices and Egress transmission devices of these paths do not necessarily match each other. For example, when there is a failure, such as a transmission line is cut (for example, an optical cable serving as the transmission line between the communication nodes 100-2 and 100-3 in FIG. 9 is cut), in such a communication network, a large number of paths fail at the same time and the respective paths are displayed on the alarm-generating path list by the process at the time of alarm generation explained above.

Accordingly, an operator confirms that a large number of paths have failed at the substantially same time in the display unit 12 of the alarm monitoring device 1. As a result of confirmation, when an operator recognizes the failure of the transmission line between the communication nodes 100-2 and 100-3, an operator can specify the transmission line between the communication nodes 100-2 and 100-3 on the alarm-generating path list and instruct the display mask to the monitoring control unit 11. FIG. 10 is a flowchart of a process at the time of setting a display mask. When the display mask is specified by an operator (Step S21), the monitoring control unit 11 searches for paths passing through the transmission devices and/or the transmission lines in which the display mask being specified, for example, the transmission line between the communication nodes 100-2 and 100-3 in the path DB 13 (Step S22). The monitoring control unit 11 turns the display mask flags of the passing paths ON (Step S23). After the display of the alarm-generating path list is cleared (Step S24), the monitoring control unit 11 displays paths having the display mask flags of OFF on the alarm-generation alarm list (Step S25). Therefore, a path, for which an operator specifies the display mask and an alarm is being generated by a known failure, can be hidden from the alarm-generating path list.

While a case of setting ON/OFF of the display mask flag has been explained above, it is also possible to configure such that the display mask flag cannot be set. In this case, as shown in FIG. 8, it suffices that the contents registered at Step S15 are displayed as the alarm-generating path list at Step S17.

As explained above, according to the present embodiment, in a communication network where a plurality of alarms are generated by one failure, the monitoring control unit 11 of the alarm monitoring device 1 displays, with respect to respective paths, only the latest alarm out of alarms having the alarm importance of the highest priority for each path ID as the alarm-generating path list. With this configuration, each of failure occurring paths is displayed with the alarm importance in one row. An operator can confirm states of a large number of paths simultaneously and take a measure to handle failures, starting from a path in which a critical alarm is generated.

The monitoring control unit 11 sorts the alarm-generating path list by the alarm generation time and displays a path having the latest alarm generation time at the head. Accordingly, in a path in which a failure is already occurring, when a failure that is not related to the previous failure occurs after a while, the display position of this path is changed to the head of the list. Thus, an operator can easily recognize that a new failure occurs.

The monitoring control unit 11 updates the alarm-generating path list after a set time since the first alarm is generated by using a hold timer. Accordingly, even when the communication network is a wide area network such as a submarine cable system and a time lag occurs between times when alarms transmitted from the respective communication nodes reach the alarm monitoring device 1, because each of a large number of alarms caused by one failure is not searched for in the alarm DB 14, a processing load of the monitoring control unit 11 can be reduced.

The monitoring control unit 11 processes selection of the alarm information displayed on the alarm-generating path list depending on not the alarm type but the alarm importance and the generation time. Accordingly, even when a new device is added to the communication network and thus the alarm type is increased, the alarm type does not need to be modified in the alarm monitoring device 1.

When a failure by which alarms are generated in a large number of paths such as a failure of a transmission line occurs, an operator can hide, from the alarm-generating path list by using a display mask function, a path passing through the transmission line and/or the transmission device in which a known failure is occurring. With this configuration, an operator can easily find, on the alarm-generating path list, a path in which an alarm is generated, the alarm being caused by other failures not related to the known failure.

### Second embodiment

According to the first embodiment, a path passing through a transmission device and/or a transmission line in which a display mask is specified is hidden from an alarm-generating path list even when an alarm is generated. According to the present embodiment, when an alarm is newly generated after a certain time elapses since the display mask is specified, the path is displayed on the alarm-generating path list. Elements different from those of the first embodiment are explained below.

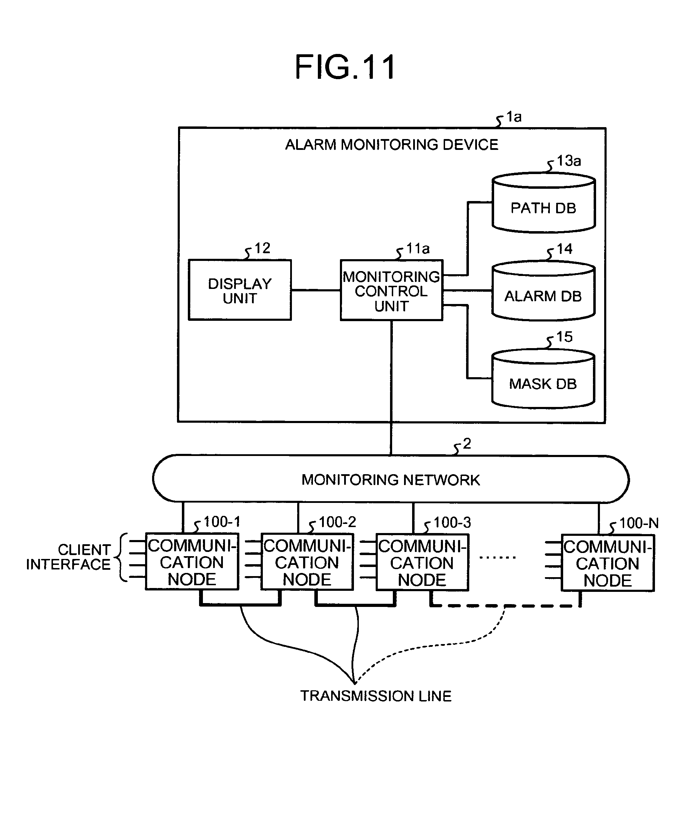

FIG. 11 is a configuration example of a communication network monitored by an alarm monitoring device according to the present embodiment. The communication network includes an alarm monitoring device 1a, the monitoring network 2, and the communication nodes 100-1 to 100-N. The present embodiment is different from the first embodiment in that the alarm monitoring device 1a is included instead of the alarm monitoring device 1 (see FIG. 1).

The alarm monitoring device 1a performs centralized management on alarms transmitted by the respective communication nodes 100-1 to 100-N, notifies an operator who is responsible for managing the communication network of generation of an alarm, and provides alarm information. The alarm monitoring device 1a includes a monitoring control unit 11a, the display unit 12, a path database (DB) 13a, the alarm database (DB) 14, and a mask database (DB) 15.

The monitoring control unit 11 a controls an operation of the entire alarm monitoring device 1a, receives alarms transmitted from the respective communication nodes 100-1 to 100-N, and stores therein the alarms in the alarm DB 14. The monitoring control unit 11 a displays a path, in which a communication failure is occurring, as an alarm-generating path list in a list format on the display unit 12.

While the path DB 13a is a database similar to that of the first embodiment (see FIG. 3), it is different from the path DB 13 in that a display-mask end time is recorded therein instead of the display mask flag for each path.

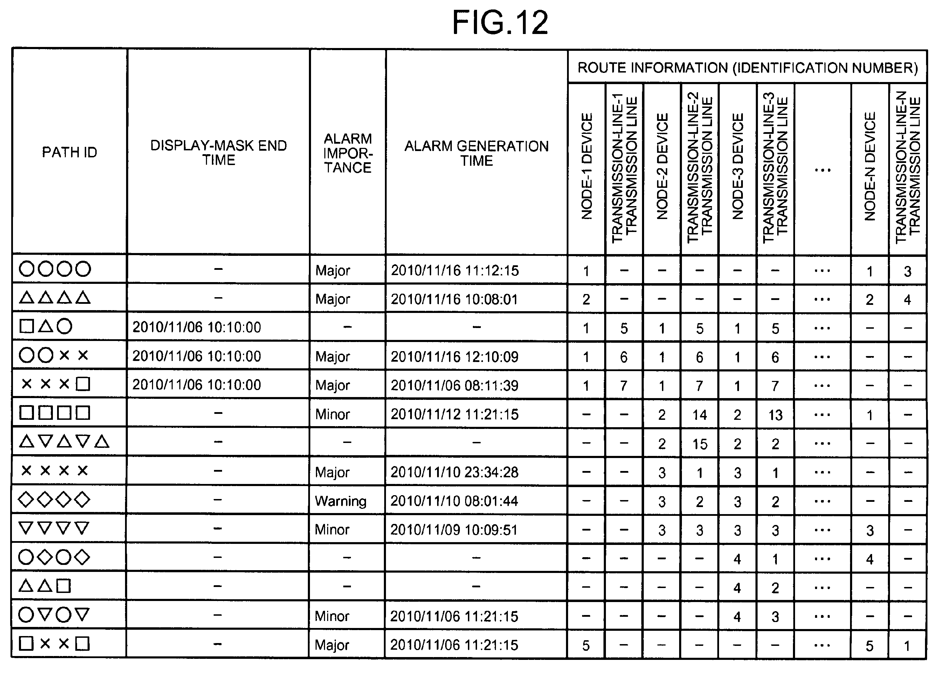

FIG. 12 is a configuration example of the path DB 13a. The path DB 13a records therein a path ID, a display-mask end time, an alarm importance, an alarm generation time, and a route information of a path of a communication network. In the path DB 13a, the display-mask end time indicates that a path is not displayed on the alarm-generating path list until a set time even while an alarm is generated. For example, it is shown that a path ID "○○××" has a display-mask end time of "2010/11/06 10:10:00", an alarm importance of "Major", an alarm generation time of "2010/11/16 12:10:09", and route information of "node-1 device 1, transmission line-1 transmission line 6, node-2 device 1, transmission line-2 transmission line 6, node-3 device 1, and transmission line-3 transmission line 6". That is, it is shown that a path of the path ID "○○××" is not displayed on the alarm-generating path list before "2010/11/06 10:10:00".

The mask DB 15 is a database in which a time when the display mask ends is stored for the ID of each transmission device and/or the ID of each transmission line installed in the communication network.

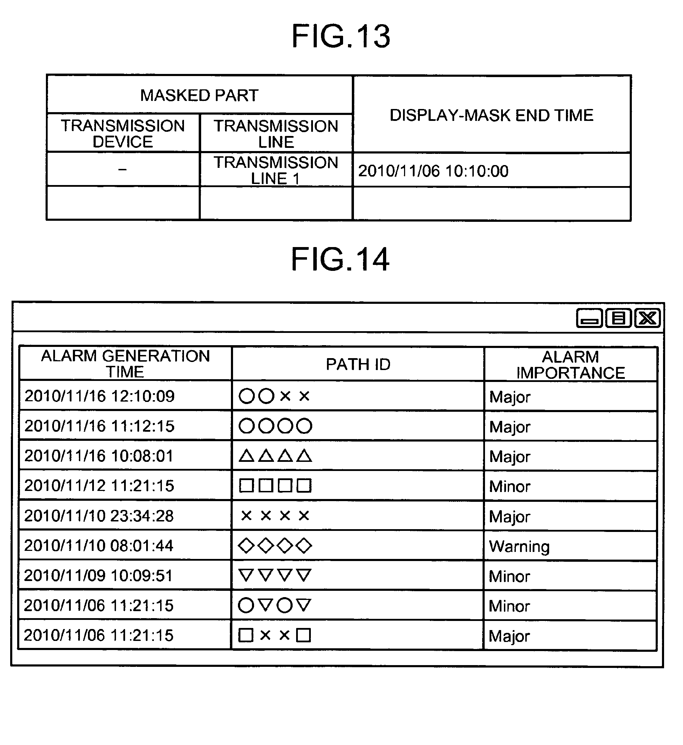

FIG. 13 is a configuration example of the mask DB 15. The mask DB 15 includes a masked part and a display-mask end time. The masked part further includes a transmission device and a transmission line and indicates a part where a mask display is set. The display-mask end time indicates a time until when the part where the mask display is set is hidden. In FIG. 13, it is shown that the display-mask end time "2010/11/06 10:10:00" is set for a masked part "transmission line 1".

The alarm-generating path list when the display-mask end time is set is explained here. FIG. 14 is a configuration example of the alarm-generating path list. In the mask DB 15 shown in FIG. 13, the display-mask end time "2010/11/06 10:10:00" is set for "transmission line 1". When this condition of FIG. 13 is applied to FIG. 12, in the path DB 13a shown in FIG. 12, the display-mask end time is set in items of path IDs "□Δ○", "○○××", and "×××□" corresponding to "transmission line 1". In this case, the alarm-generating path list shown in FIG. 14 is provided by hiding the path ID of the applicable "×××□" from the alarm-generating path list shown in FIG. 2.

An alarm monitoring operation of the alarm monitoring device 1a according to the present embodiment is explained next. An operation from when the transmission device transmits an alarm to when the alarm monitoring device 1a receives the alarm is same as that in the first embodiment. Similarly to the first embodiment, when the alarm monitoring device 1a receives an alarm, the alarm monitoring device 1a performs the process when receiving an alarm shown in FIG. 7.

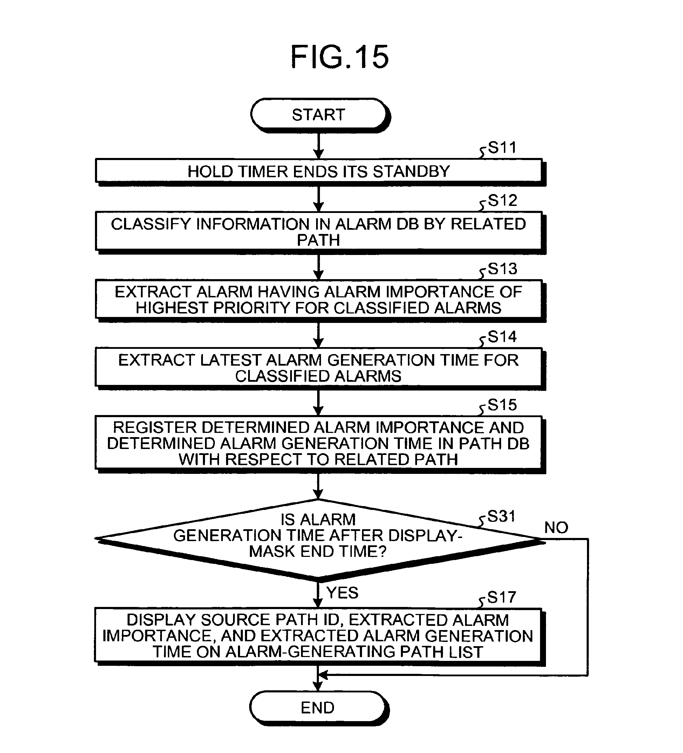

A process in the alarm monitoring device 1a before the alarm-generating path list is displayed after the hold timer expires is explained next. FIG. 15 is a flowchart of a process before displaying the alarm-generating path list. A process from when the hold timer expires (Step S11) to when the data is registered as data of a corresponding path in the path DB 13a (Step S15) is same as that in the first embodiment (see FIG. 8), except that the path DB 13 is changed to the path DB 13a.

The monitoring control unit 11 a then confirms the alarm generation time of the corresponding path in the path DB 13a (Step S31) and when the alarm generation time is after the display-mask end time (YES at Step S31), displays a path ID, an alarm importance, and an alarm generation time registered in the path DB 13a as the alarm-generating path list on the display unit 12 (Step S17). At this time, when there is an already displayed path, paths are sorted by the alarm generation time and displayed so that a path of the latest alarm generation time is at the head of the list. On the other hand, when the alarm generation time is before the display-mask end time (NO at Step S31), the monitoring control unit 11 a ends the process without displaying the corresponding path on the alarm-generating path list.

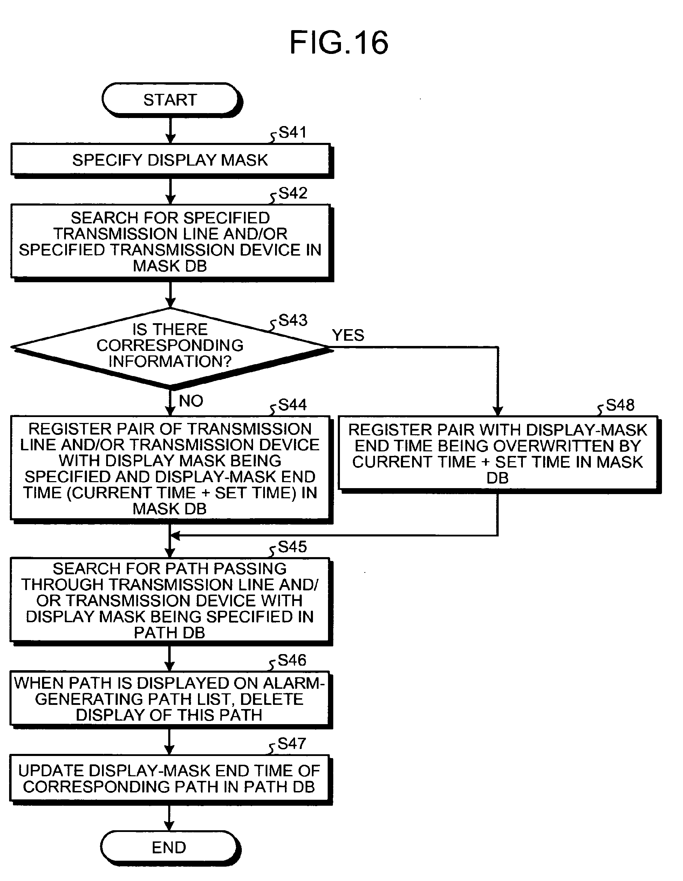

A case where an operator specifies the display mask is explained next. FIG. 16 is a flowchart of a process at the time of specifying the display mask. First, when the display mask is specified by an operator (Step S41), the monitoring control unit 11 a searches for a specified transmission device and/or a specified transmission line in the mask DB 15 (Step S42). When there is no information corresponding to a newly specified transmission device and/or a newly specified transmission line in the mask DB 15 (NO at Step S43), the ID(s) of the specified transmission device and/or the specified transmission line and a time after a set time from the current time are registered as the display-mask end time (Step S44). The monitoring control unit 11 a searches for paths passing through the specified transmission line and/or the specified transmission device in the path DB 13a (Step S45). When a corresponding path is found, the alarm generation time and the display-mask end time of this path in the path DB 13a are confirmed. When the display-mask end time is cleared or the alarm generation time is before the display-mask end time, this path is being displayed on the alarm-generating path list. Accordingly, the monitoring control unit 11a deletes this path from the alarm-generating path list (Step S46), and updates the display-mask end time in the path DB 13a to the display-mask end time in the mask DB 15 (Step S47).

Meanwhile, as a result of searching for the specified transmission device and/or the specified transmission line in the mask DB 15 (Step S42), when there is corresponding information (YES at Step S43), the display-mask end time in the mask DB 15 is updated from the current time to the time after the set time (Step S48). A process subsequent to Step S45 is then continued.

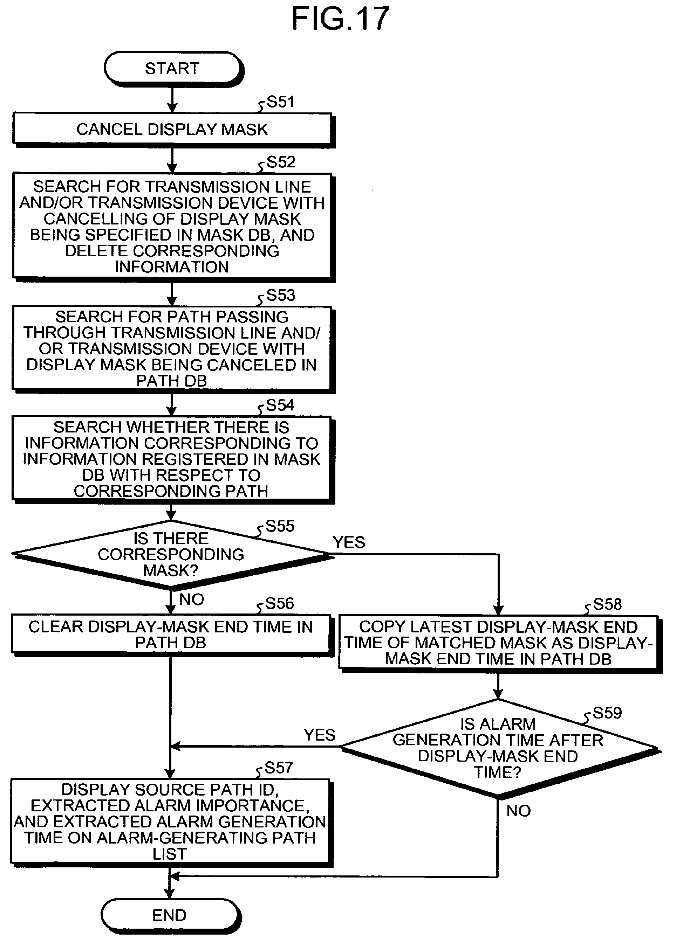

An operation when an operator cancels a display mask is explained next. FIG. 17 is a flowchart of a process at the time of cancelling a display mask in the alarm monitoring device 1a. When the monitoring control unit 11 a is instructed by an operator to cancel a display mask (Step S51), the monitoring control unit 11 a searches for a specified transmission device and/or a specified transmission line, in which cancelling of the display mask is specified, in the mask DB 15 and deletes the corresponding information (Step S52). The monitoring control unit 11 a searches for a path passing through the transmission line and/or the transmission device with the display mask being canceled in the path DB 13a (Step S53).

When the corresponding path is found, the monitoring control unit 11 a performs a search whether information of other passing transmission lines and/or transmission devices is registered in the mask DB 15 with respect to the corresponding path (Step S54). With respect to a path in which the corresponding mask information is not found (NO at Step S55), the monitoring control unit 11a clears the display-mask end time of the corresponding path ID in the path DB 13a (Step S56). Further, when the alarm-generation time is registered, that is, when an alarm is generated, displays the path ID, the alarm generation time, and the alarm importance of the corresponding path on the alarm-generating path list (Step S57).

Meanwhile, with respect to the path in which the corresponding mask information is found (YES at Step S55), the monitoring control unit 11 a copies, out of the mask information, the latest display-mask end time as the display-mask end time of this path in the path DB 13a (Step S58). When the alarm generation time of this path registered in the path DB 13a is after the display-mask end time (YES at Step S59), the monitoring control unit 11 a displays this path on the alarm-generating path list (Step S57). When the alarm generation time of this path is before the display-mask end time (NO at Step S59), the monitoring control unit 11 a ends the process without displaying the path on the alarm-generating path list.

As described above, according to the present embodiment, the monitoring control unit 11a sets a set time during which a display-masked path is hidden. The monitoring control unit 11 a does not display a path corresponding to the display mask on the alarm-generating path list for the set time. With this configuration, only alarms in a set time during which an alarm related to a recognized failure reaches the alarm monitoring device are not displayed on the alarm-generating path list, as well as newly generated alarms on a path that are not related to the recognized failure can be displayed on the alarm-generating path list. Therefore, when failures independent from each other occur on the same path in an overlapped manner, an operator can find the alarms.

### Industrial Applicability

As described above, the alarm monitoring device according to the present invention is useful for monitoring a network, and is particularly suitable for a network in which where a plurality of alarms are generated by the same cause.

### Reference Signs List

1, 1a alarm monitoring device
2 monitoring network
11, 11a monitoring control unit
12 display unit
13, 13a path database (DB)
14 alarm database (DB)
15 mask database (DB)
31, 32 transmission line
41 path
100-1, 100-2, 100-3, ..., 100-N communication node
101-1, 101-2, ..., 101-N node management device
201-1, 201-2, ..., 201-n, 202-1, 202-2, ..., 202-n, ..., (200+N)-1, (200+N)-2, ..., (200+N)-n transmission device

## Claims

1. An alarm monitoring device (1; 1a) that monitors, in a network which includes a plurality of transmission devices and establishes a route connecting one transmission device to another transmission device via a transmission line or via a transmission line and a transmission device other than the two transmission devices as a path, when a failure has occurred in the transmission device or the transmission line, an alarm transmitted from a transmission device that has detected the failure, the alarm monitoring device (1; 1a) comprising:
an alarm database (14) in which information included in the alarm is stored, the information being a detected time, a generated location, an alarm importance, and a path ID of a path having the generated location as a route; and
a monitoring control unit (11; 11a) configured to store information of a received alarm in the alarm database (14), extract one alarm from the alarm database (14) for each path ID based on an alarm importance and a detected time, determine the detected time as an alarm generation time, associate the path ID of the extracted alarm with the alarm generation time and the alarm importance, and cause to display the path ID on an alarm-generating path list, wherein the monitoring control unit (11; 11 a) includes a hold timer and is configured to wait for displaying the path ID included in the received alarm on the alarm-generating path list until a period set by the hold timer elapses, after the monitoring control unit (11; 11a) first receives an alarm on a path of the path ID, or after the monitoring control unit (11; 11a) first receives an alarm on a path of the path ID since the alarm-generating path list is displayed with respect to the path ID.

2. The alarm monitoring device (1; 1a) according to claim 1, wherein the monitoring control unit (11; 11 a) displays an alarm having a highest alarm importance for each path ID on the alarm-generating path list, and when the number of alarms having a highest alarm importance is two or more, the monitoring control unit (11; 11 a) displays an alarm thereof having a latest alarm generation time for each path ID on the alarm-generating path list.

3. The alarm monitoring device (1a) according to claim 1, further comprising a path database (13a) for recording therein a path ID of a path established in the network and information on a transmission device and a transmission line that configure the path, wherein
when the monitoring control unit (11a) receives a display mask instruction to hide a path having a predetermined transmission device and/or a predetermined transmission line as a route, the monitoring control unit (11 a) searches the path database (13a) to obtain information on a corresponding path having the transmission device and/or the transmission line as a route and hides the obtained path from the alarm-generating path list.

4. The alarm monitoring device (1 a) according to claim 1, further comprising a path database (13a) for recording therein a path ID of a path established in the network and information on a transmission device and a transmission line that configure the path, wherein
when the monitoring control unit (11 a) receives a display mask instruction to hide a path having a predetermined transmission device and/or a predetermined transmission line as a route, the monitoring control unit (11a) searches the path database (13a) to obtain information on a corresponding path having the transmission device and/or the transmission line as a route and hides the obtained path from the alarm-generating path list for a period set in advance.

5. An alarm monitoring method of an alarm monitoring device (1; 1a) that monitors, in a network which includes a plurality of transmission devices and establishes a route connecting one transmission device to another transmission device via a transmission line or via a transmission line and a transmission device other than the two transmission devices as a path, when a failure has occurred in the transmission device or the transmission line, an alarm transmitted from a transmission device that has detected a failure, wherein
when the alarm monitoring device (1; 1a) includes an alarm database (14) in which information included in the alarm is stored, the information being on a detected time, a generated location, an alarm importance, and a path ID of a path with the generated location as a route,
the alarm monitoring method comprises:
a registering step of the alarm monitoring device (1; 1 a) storing information of a received alarm in the alarm database (14); and
a display controlling step of the alarm monitoring device (1; 1 a) extracting one alarm from the alarm database (14) for each path ID based on an alarm importance and a detected time, determining the detected time as an alarm generation time, associating the path ID of the extracted alarm with the alarm generation time and the alarm importance, and displaying the path ID on an alarm-generating path list, wherein
the alarm monitoring device (1a) further includes a hold timer,
and the display controlling step further includes waiting for displaying the path ID included in the received alarm on the alarm-generating path list until a period set by the hold timer elapses, after an alarm on a path of the path ID is received first, or after an alarm on a path of the path ID is received first since an alarm-generating path list is displayed with respect to the path ID.

6. The alarm monitoring method according to claim 5, wherein at the display controlling step, an alarm having a highest alarm importance is displayed for each path ID on the alarm-generating path list, and when the number of alarms having a highest alarm importance is two or more, an alarm having a latest alarm generation time is displayed for each path ID on the alarm-generating path list.

7. The alarm monitoring method according to claim 5, wherein
when the alarm monitoring device (1a) further includes a path database (13a) for recording therein a path ID of a path established in the network and information on a transmission device and a transmission line that configure a path, and
at the display controlling step, when a display mask instruction to hide a path having a predetermined transmission device and/or a predetermined transmission line as a route is received, searching the path database (13a) to obtain information on a corresponding instructed path having the transmission device and/or the transmission line as a route and hiding the obtained path from the alarm-generating path list is executed.

8. The alarm monitoring method according to claim 5, wherein
when the alarm monitoring device (1a) further includes a path database (13a) for recording therein a path ID of a path established in the network and information on a transmission device and a transmission line that configure the path,
at the display controlling step, when a display mask instruction to hide a path having a predetermined transmission device and/or a predetermined transmission line as a route is received, searching the path database (13a) to obtain information on a corresponding instructed path having the transmission device and/or the transmission line as a route and hiding the obtained path from the alarm-generating path list for a period set in advance is executed.

## Patentansprüche

1. Alarmüberwachungsvorrichtung (1, 1 a) die in einem Netzwerk, das eine Vielzahl von Übertragungsvorrichtungen umfasst und eine Route aufbaut, die eine Übertragungsvorrichtung mit einer anderen Übertragungsvorrichtung über eine Übertragungsleitung oder über eine Übertragungsleitung und eine Übertragungsvorrichtung außer den zwei Übertragungsvorrichtungen als einen Pfad verbindet, wenn ein Defekt in der Übertragungsvorrichtung oder der Übertragungsleitung aufgetreten ist, einen Alarm überwacht, der von einer Übertragungsvorrichtung, die den Defekt nachgewiesen hat, übertragen wird, wobei die Alarmüberwachungsvorrichtung (1, 1 a) Folgendes umfasst:
eine Alarmdatenbank (14), in der Information, die im Alarm enthalten ist, gespeichert ist, wobei die Information eine nachgewiesene Zeit, ein erzeugter Standort, eine Alarmbedeutung und eine Pfad-ID eines Pfads mit dem erzeugten Standort als einer Route ist; und
eine Überwachungskontrolleinheit (11; 11a), die konfiguriert ist, um Information von einem erhaltenen Alarm in der Alarmdatenbank (14) zu speichern, einen Alarm von der Alarmdatenbank (14)a für jede Pfad-ID basierend auf einer Alarmbedeutung und einer nachgewiesenen Zeit zu extrahieren, die nachgewiesene Zeit als eine Alarmerzeugungszeit zu bestimmen, die Pfad-ID des extrahierten Alarms mit der Alarmerzeugungszeit und der Alarmbedeutung zu assoziieren und die Anzeige der Pfad-ID in einer Alarmerzeugungspfadliste zu verursachen, wobei die Überwachungskontrolleinheit (11; 11a) einen Hold-Timer umfasst und konfiguriert ist, um auf die Anzeige der Pfad-ID, die im erhaltenen Alarm enthalten ist, auf der Alarmerzeugungspfadliste zu warten, bis ein Zeitraum, der vom Hold-Timer eingestellt ist, abläuft, nachdem die Überwachungskontrolleinheit (11; 11a) zuerst einen Alarm auf einem Pfad der Pfad-ID erhält, oder nachdem die Überwachungskontrolleinheit (11; 11a) zuerst einen Alarm auf einem Pfad der Pfad-ID erhält, seit die Alarmerzeugungspfadliste mit Bezug auf die Pfad-ID angezeigt ist.

2. Alarmüberwachungsvorrichtung (1; 1 a) nach Anspruch 1, wobei die Überwachungskontrolleinheit (11, 11a) einen Alarm anzeigt, der eine höchste Alarmbedeutung für jede Pfad-ID auf der Alarmerzeugungspfadliste aufweist, und wenn die Anzahl von Alarmen, die eine höchste Alarmbedeutung aufweist, zwei oder mehr ist, die Überwachungskontrolleinheit (11, 11a) einen Alarm davon anzeigt, der eine späteste Alarmerzeugungszeit für jede Pfad-ID auf der Alarmerzeugungspfadliste aufweist.

3. Alarmüberwachungsvorrichtung (1 a) nach Anspruch 1, weiter umfassend eine Pfaddatenbank (13a) zur Aufzeichnung einer Pfad-ID eines Pfads darin, der im Netzwerk aufgebaut ist, und Information über eine Übertragungsvorrichtung und eine Übertragungsleitung, die den Pfad konfigurieren, wobei
wenn die Übertragungskontrolleinheit (11a) eine Anzeigemaskenanweisung erhält, einen Pfad mit einer vorbestimmten Übertragungsvorrichtung und/oder einer vorbestimmten Übertragungsleitung als eine Route zu verdecken, die Überwachungskontrolleinheit (11a) die Pfaddatenbank (13a) durchsucht, um Information über einen entsprechenden Pfad zu erhalten, der die Übertragungsvorrichtung und/oder die Übertragungslinie als eine Route aufweist und den erhaltenen Pfad vor der Alarmerzeugungspfadliste verdeckt.

4. Alarmüberwachungsvorrichtung (1 a) nach Anspruch 1, weiter umfassend eine Pfaddatenbank (13a) zur Aufzeichnung einer Pfad-ID eines Pfads darin, der im Netzwerk aufgebaut ist, und Information über eine Übertragungsvorrichtung und eine Übertragungsleitung, die den Pfad konfigurieren, wobei
wenn die Übertragungskontrolleinheit (11a) eine Anzeigemaskenanweisung erhält, einen Pfad mit einer vorbestimmten Übertragungsvorrichtung und/oder einer vorbestimmten Übertragungsleitung als eine Route zu verdecken, die Überwachungskontrolleinheit (11a) die Pfaddatenbank (13a) durchsucht, um Information über einen entsprechenden Pfad zu erhalten, der die Übertragungsvorrichtung und/oder die Übertragungslinie als eine Route aufweist und den erhaltenen Pfad vor der Alarmerzeugungspfadliste während eines im Voraus eingestellten Zeitraums verdeckt.

5. Alarmüberwachungsverfahren einer Alarmüberwachungsvorrichtung (1, 1 a), die in einem Netzwerk, das eine Vielzahl von Übertragungsvorrichtungen umfasst und eine Route aufbaut, die eine Übertragungsvorrichtung mit einer anderen Übertragungsvorrichtung über eine Übertragungsleitung oder über eine Übertragungsleitung und eine Übertragungsvorrichtung außer den zwei Übertragungsvorrichtungen als einen Pfad verbindet, wenn ein Defekt in der Übertragungsvorrichtung oder der Übertragungsleitung aufgetreten ist, einen Alarm überwacht, der von einer Übertragungsvorrichtung, die den Defekt nachgewiesen hat, übertragen wird, wobei
wenn die Alarmüberwachungsvorrichtung (1, 1 a) eine Alarmdatenbank (14) umfasst, in der Information, die im Alarm enthalten ist, gespeichert ist, wobei die Information eine nachgewiesene Zeit, ein erzeugter Standort, eine Alarmbedeutung und eine Pfad-ID eines Pfads mit dem erzeugten Standort als einer Route ist,
wobei das Alarmüberwachungsverfahren Folgendes umfasst:
einen Registrierschritt der Alarmüberwachungsvorrichtung (1, 1 a), bei dem Information über einen erhaltenen Alarm in der Alarmdatenbank (14) gespeichert werden; und
einen Anzeigekontrollschritt der Alarmüberwachungsvorrichtung (1, 1 a), bei dem ein Alarm von der Alarmdatenbank (14) für jede Pfad-ID basierend auf einer Alarmbedeutung und einer nachgewiesenen Zeit extrahiert, die nachgewiesene Zeit als eine Alarmerzeugungszeit bestimmt, die Pfad-ID des extrahierten Alarms mit der Alarmerzeugungszeit und der Alarmbedeutung assoziiert und die Pfad-ID in einer Alarmerzeugungspfadliste anzeigt wird, wobei
die Alarmüberwachungsvorrichtung (1 a) weiter einen Hold-Timer umfasst,
und der Anzeigekontrollschritt weiter das Warten auf die Anzeige der Pfad-ID, der im erhaltenen Alarm enthalten ist, in der Alarmerzeugungspfadliste umfasst, bis ein Zeitraum, der vom Hold-Timer eingestellt ist, abläuft, nachdem ein Alarm auf einem Pfad der Pfad-ID zuerst erhalten wird, oder nachdem ein Alarm auf einem Pfad der Pfad-ID zuerst erhalten wird, seit eine Alarmerzeugungspfadliste mit Bezug auf die Pfad-ID angezeigt ist.

6. Alarmüberwachungsverfahren nach Anspruch 5, wobei beim Anzeigekontrollschritt ein Alarm mit einer höchsten Alarmbedeutung für jede Pfad-ID in der Alarmerzeugungspfadliste angezeigt wird, und wenn die Anzahl von Alarmen, die eine höchste Alarmbedeutung aufweisen, zwei oder mehr ist, ein Alarm mit einer spätesten Alarmerzeugungszeit für jede Pfad-ID in der Alarmerzeugungspfadliste angezeigt wird.

7. Alarmüberwachungsverfahren nach Anspruch 5, wobei
wenn die Alarmüberwachungsvorrichtung (1 a) weiter eine Pfaddatenbank (13a) umfasst, um darin eine Pfad-ID eines Pfads aufzuzeichnen, der im Netzwerk aufgebaut ist, und Information über eine Übertragungsvorrichtung und eine Übertragungsleitung, die einen Pfad konfigurieren,
beim Schritt des Kontrollierens der Anzeige wenn eine Anzeigemaskenanweisung, einen Pfad mit einer vorbestimmten Übertragungsvorrichtung und/oder einer vorbestimmten Übertragungsleitung als eine Route zu verdecken, erhalten wird, die Durchsuchung der Datenbank (13a), um Information über einen entsprechenden angewiesenen Pfad mit der Übertragungsvorrichtung und/oder der Übertragungslinie als eine Route zu erhalten die Verdeckung des erhaltenen Pfads von der Alarmerzeugungspfadliste erfolgt.

8. Alarmüberwachungsverfahren nach Anspruch 5, wobei
wenn die Alarmüberwachungsvorrichtung (1 a) weiter eine Pfaddatenbank (13a) umfasst, um darin eine Pfad-ID eines Pfads aufzuzeichnen, der im Netzwerk aufgebaut ist, und Information über eine Übertragungsvorrichtung und eine Übertragungsleitung, die den Pfad konfigurieren, und
beim Schritt des Kontrollierens der Anzeige, wenn eine Anzeigemaskenanweisung, einen Pfad mit einer vorbestimmten Übertragungsvorrichtung und/oder einer vorbestimmten Übertragungsleitung als eine Route zu verdecken, erhalten wird, die Durchsuchung der Pfad-Datenbank (13a), um Information über einen entsprechenden angewiesenen Pfad zu erhalten, der die Übertragungsvorrichtung und/oder die Übertragungslinie als eine Route aufweist und das Verdecken des erhaltenen Pfads von der Alarmerzeugungspfadliste während eines im Voraus eingestellten Zeitraums erfolgt.

## Revendications

1. Dispositif de surveillance d'alarme (1 ; 1 a) qui surveille, dans un réseau qui inclut une pluralité de dispositifs de transmission et qui établit un trajet connectant un dispositif de transmission à un autre dispositif de transmission, par l'intermédiaire d'une ligne de transmission, ou par l'intermédiaire d'une ligne de transmission et d'un dispositif de transmission distinct des deux dispositifs de transmission, en qualité de chemin, lorsqu'une défaillance s'est produite dans le dispositif de transmission ou la ligne de transmission, une alarme émise à partir d'un dispositif de transmission qui a détecté la défaillance, le dispositif de surveillance d'alarme (1 ; 1 a) comprenant :
une base de données d'alarmes (14) dans laquelle des informations incluses dans l'alarme sont stockées, les informations correspondant à un instant détecté, à un emplacement généré, à une importance d'alarme, et à un identifiant de chemin d'un chemin présentant l'emplacement généré en qualité de trajet ; et
une unité de commande de surveillance (11 ; 11 a) configurée de manière à stocker des informations d'une alarme reçue dans la base de données d'alarmes (14), à extraire une alarme de la base de données d'alarmes (14) pour chaque identifiant de chemin, sur la base d'une importance d'alarme et d'un instant détecté, à déterminer l'instant détecté en tant qu'un instant de génération d'alarme, à associer l'identifiant de chemin de l'alarme extraite à l'instant de génération d'alarme et à l'importance d'alarme, et à occasionner l'affichage de l'identifiant de chemin sur une liste de chemins de génération d'alarme, dans lequel l'unité de commande de surveillance (11 ; 11 a) inclut un temporisateur de maintien et est configurée de manière à attendre pour afficher l'identifiant de chemin inclus dans l'alarme reçue sur la liste de chemins de génération d'alarme jusqu'à l'échéance d'une période définie par le temporisateur de maintien, que l'unité de commande de surveillance (11 ; 11 a) reçoive pour la première fois une alarme sur un chemin de l'identifiant de chemin, ou que l'unité de commande de surveillance (11 ; 11 a) reçoive pour la première fois une alarme sur un chemin de l'identifiant de chemin depuis que la liste de chemins de génération d'alarme est affichée relativement à l'identifiant de chemin.

2. Dispositif de surveillance d'alarme (1 ; 1 a) selon la revendication 1, dans lequel l'unité de commande de surveillance (11 ; 11a) affiche une alarme présentant une importance d'alarme la plus élevée pour chaque identifiant de chemin sur la liste de chemins de génération d'alarme, et lorsque le nombre d'alarmes présentant une importance d'alarme la plus élevée est égal à deux ou plus, l'unité de commande de surveillance (11 ; 11 a) affiche une alarme connexe présentant un instant de génération d'alarme le plus récent pour chaque identifiant de chemin sur la liste de chemins de génération d'alarme.

3. Dispositif de surveillance d'alarme (1a) selon la revendication 1, comprenant en outre une base de données de chemins (13a) destinée à enregistrer dans celle-ci un identifiant de chemin d'un chemin établi dans le réseau et des informations sur un dispositif de transmission et une ligne de transmission qui configurent le chemin, dans lequel
lorsque l'unité de commande de surveillance (11a) reçoit une instruction de masque d'affichage visant à masquer un chemin présentant un dispositif de transmission prédéterminé et/ou une ligne de transmission prédéterminée en tant que trajet, l'unité de commande de surveillance (11a) recherche dans la base de données de chemins (13a) en vue d'obtenir des informations sur un chemin correspondant présentant le dispositif de transmission et/ou la ligne de transmission en tant que trajet, et masque le chemin obtenu à partir de la liste de chemins de génération d'alarme.

4. Dispositif de surveillance d'alarme (1a) selon la revendication 1, comprenant en outre une base de données de chemins (13a) destinée à enregistrer dans celle-ci un identifiant de chemin d'un chemin établi dans le réseau et des informations sur un dispositif de transmission et une ligne de transmission qui configurent le chemin, dans lequel
lorsque l'unité de commande de surveillance (11a) reçoit une instruction de masque d'affichage visant à masquer un chemin présentant un dispositif de transmission prédéterminé et/ou une ligne de transmission prédéterminée en tant que trajet, l'unité de commande de surveillance (11a) recherche dans la base de données de chemins (13a) en vue d'obtenir des informations sur un chemin correspondant présentant le dispositif de transmission et/ou la ligne de transmission en tant que trajet, et masque le chemin obtenu à partir de la liste de chemins de génération d'alarme pendant une période définie à l'avance.

5. Procédé de surveillance d'alarme d'un dispositif de surveillance d'alarme (1 ; 1 a) qui surveille, dans un réseau qui inclut une pluralité de dispositifs de transmission et établit un trajet connectant un dispositif de transmission à un autre dispositif de transmission, par l'intermédiaire d'une ligne de transmission, ou par l'intermédiaire d'une ligne de transmission et d'un dispositif de transmission distinct des deux dispositifs de transmission, en qualité de chemin, lorsqu'une défaillance s'est produite dans le dispositif de transmission ou la ligne de transmission, une alarme émise à partir d'un dispositif de transmission qui a détecté la défaillance, dans lequel :
lorsque le dispositif de surveillance d'alarme (1 ; 1 a) inclut une base de données d'alarmes (14) dans laquelle des informations incluses dans l'alarme sont stockées, les informations correspondant à un instant détecté, à un emplacement généré, à une importance d'alarme, et à un identifiant de chemin d'un chemin présentant l'emplacement généré en qualité de trajet,
le dispositif de surveillance d'alarme comporte :
une étape d'enregistrement dans laquelle le dispositif de surveillance d'alarme (1 ; 1 a) stocke des informations d'une alarme reçue dans la base de données d'alarmes (14) ; et
une étape de commande d'affichage dans laquelle le dispositif de surveillance d'alarme (1 ; 1 a) extrait une alarme de la base de données d'alarmes (14) pour chaque identifiant de chemin, sur la base d'une importance d'alarme et d'un instant détecté, détermine l'instant détecté en tant qu'un instant de génération d'alarme, associe l'identifiant de chemin de l'alarme extraite à l'instant de génération d'alarme et à l'importance d'alarme, et affiche l'identifiant de chemin sur une liste de chemins de génération d'alarme, dans lequel
le dispositif de surveillance d'alarme (1a) inclut un temporisateur de maintien ;
l'étape de commande d'affichage inclut en outre l'étape consistant à attendre pour afficher l'identifiant de chemin inclus dans l'alarme reçue sur la liste de chemins de génération d'alarme jusqu'à l'échéance d'une période définie par le temporisateur de maintien, qu'une alarme sur un chemin de l'identifiant de chemin ait été reçue pour la première fois, ou qu'une alarme sur un chemin de l'identifiant de chemin ait été reçue pour la première fois depuis qu'une liste de chemins de génération d'alarme est affichée relativement à l'identifiant de chemin.

6. Procédé de surveillance d'alarme selon la revendication 5, dans lequel, à l'étape de commande d'affichage, une alarme présentant une importance d'alarme la plus élevée est affichée pour chaque identifiant de chemin sur la liste de chemins de génération d'alarme, et lorsque le nombre d'alarmes présentant une importance d'alarme la plus élevée est égal à deux ou plus, une alarme présentant un instant de génération d'alarme le plus récent est affichée pour chaque identifiant de chemin sur la liste de chemins de génération d'alarme.

7. Procédé de surveillance d'alarme selon la revendication 5, dans lequel
lorsque le dispositif de surveillance d'alarme (1a) inclut en outre une base de données de chemins (13a) destinée à enregistrer dans celle-ci un identifiant de chemin d'un chemin établi dans le réseau et des informations sur un dispositif de transmission et une ligne de transmission qui configurent un chemin ; et
à l'étape de commande d'affichage, lorsqu'une instruction de masque d'affichage visant à masquer un chemin présentant un dispositif de transmission prédéterminé et/ou une ligne de transmission prédéterminée en qualité de trajet est reçue, une recherche dans la base de données de chemins (13a) en vue d'obtenir des informations sur un chemin correspondant demandé dans l'instruction présentant le dispositif de transmission et/ou la ligne de transmission en qualité de trajet, et un masquage du chemin obtenu à partir de la liste de chemins de génération d'alarme, sont exécutés.

8. Procédé de surveillance d'alarme selon la revendication 5, dans lequel
lorsque le dispositif de surveillance d'alarme (1a) inclut en outre une base de données de chemins (13a) destinée à enregistrer dans celle-ci un identifiant de chemin d'un chemin établi dans le réseau et des informations sur un dispositif de transmission et une ligne de transmission qui configurent le chemin,
à l'étape de commande d'affichage, lorsqu'une instruction de masque d'affichage visant à masquer un chemin présentant un dispositif de transmission prédéterminé et/ou une ligne de transmission prédéterminée en qualité de trajet est reçue, une recherche dans la base de données de chemins (13a) en vue d'obtenir des informations sur un chemin correspondant demandé dans l'instruction présentant le dispositif de transmission et/ou la ligne de transmission en qualité de trajet, et un masquage du chemin obtenu à partir de la liste de chemins de génération d'alarme pendant une période définie à l'avance, sont exécutés.
